# EUROPÄISCHE PATENTSCHRIFT

(11) **EP 1 681 498 B1**
(45) Veröffentlichungstag und Bekanntmachung des Hinweises auf die Patenterteilung: **03.10.2007**
(21) Anmeldenummer: 05000480.3
(22) Anmeldetag: 12.01.2005
(51) Int. Cl.: F16J 15/32

(54) **Dichtung**
Sealing
Joint d'étanchéité

(43) Veröffentlichungstag der Anmeldung: 19.07.2006
(73) Patentinhaber: Carl Freudenberg KG, 69469 Weinheim (DE)
(72) Erfinder: Lutaud, Dominique, 52360 Orbigny au Mont (FR); Sitarz, Marc, 52200 Langres (FR); Humbert, Clement, 52200 Langres (FR)

(56) Entgegenhaltungen:
- US-A- 3 717 351
- US-A- 4 331 254
- US-A- 5 032 335
- US-A- 5 874 170

## Beschreibung

### Technisches Gebiet

Die Erfindung betrifft eine Dichtung, umfassend einen Stützkörper und ein flexibel deformierbares flächiges Dichtelement, wobei das Dichtelement durch den Stützkörper zumindest bereichsweise fixierbar ist und wobei das Dichtelement einstückig ausgebildet ist und durch den Stützkörper in mindestens drei funktionale Bereiche aufteilbar ist, wobei der Stützkörper einstückig ausgebildet ist und das Dichtelement beidseitig umgibt.

### Stand der Technik

Derartige Dichtungen sind aus der DE 27 09 000 oder der US-A-3717351 bekannt. Die vorbekannte Dichtung umfasst einen Stützkörper und ein Dichtelement, die beide aus einem polymeren Werkstoff gebildet sind. Das Dichtelement ist von dem Stützkörper beidseitig umgeben und fixiert. Bei dem Stützkörper und dem Dichtelement erfolgt die Formgebung im Spritzguss-Verfahren. Dabei ist von Nachteil, dass für Dichtelemente, die im Spritzguss-Verfahren hergestellt sind, nicht jeder Dichtungswerkstoff verwendet werden kann.

### Darstellung der Erfindung

Der Erfindung liegt die Aufgabe zugrunde, eine Dichtung mit einem einfach herstellbaren Dichtelement bereitzustellen.

Diese Aufgabe wird mit den Merkmalen von Patentanspruch 1 gelöst. Auf vorteilhafte Ausgestaltungen nehmen die Unteransprüche Bezug.

Zur Lösung der Aufgabe ist das Dichtelement als Scheibe oder als Hohlkegelstumpf ausgebildet.
Ein als Scheibe oder als Hohlkegelstumpf ausgebildetes Dichtelement ist besonders einfach herstellbar. Neben dem Spritzgießen kann das Dichtelement aus einem rohrförmigen oder einem zylinderförmigen Halbzeug hergestellt werden. Dabei können aus dem Halbzeug Scheiben oder Hohlkegelstümpfe in der gewünschten Dicke beispielsweise durch Drehen abgestochen werden. Das Halbzeug kann aus verschiedensten Werkstoffen durch Gießen oder Sintern hergestellt werden. Profilierungen des Dichtelements können durch Prägen oder Drehen in das Dichtelement eingebracht werden. Die Dichtung weist nur zwei einfach gestaltete Bauelemente auf, wodurch die Dichtung einfach und kostengünstig herstellbar ist.

Ein erster Bereich kann dem inneren Umfang der Dichtung zugeordnet sein, wobei dem ersten Bereich eine Dichtlippe zugeordnet sein kann, welche an ein abzudichtendes Maschinenelement anlegbar ist. Bei einem als Scheibe ausgebildeten Dichtelement liegt das Dichtelement auch ohne zusätzliches Federelement unter elastischer Vorspannung dichtend an dem abzudichtenden Maschinenelement an. Bei einem als Hohlkegelstumpf ausgebildeten Dichtelement liegt das Dichtelement ebenfalls dichtend an dem abzudichtenden Maschinenelement an. Jedoch ist die elastische Vorspannung geringer als bei dem als Scheibe ausgebildeten Dichtelement.

Ein zweiter Bereich kann als Anbindungsbereich an den Stützkörper fungieren. Durch den zweiten Bereich wird das Dichtelement in seiner Lage fixiert.

Ein dritter Bereich kann dem äußeren Umfang der Dichtung zugeordnet sein und an eine starre Struktur anlegbar sein. Das Dichtelement stellt somit ein einziges Dichtelement zur gleichzeitigen Abdichtung der dynamischen Dichtheit gegenüber dem abzudichtenden Maschinenelement und der statischen Dichtheit gegenüber dem Gehäuse dar. Der Aufbau der Dichtung wird dadurch vereinfacht, da nur ein Dichtelement an dem Stützkörper zu fixieren ist.

Die Dichtscheibe kann aus einem PTFE-Compound oder aus einer mit einer PTFE-Dispersion imprägnierten Vlies- und/oder Filzstofflage oder aus einem polymerem durch Latex gebundenen Vliesstoff gebildet sein. Dichtelemente aus PTFE werden aus Halbzeugen hergestellt. PTFE ist beständig gegenüber einer Vielzahl von Medien. Da auch die statische Dichtung aus PTFE besteht verringern sich die aufzubringenden Kräfte beim Einpressen der Dichtung in die abzudichtende Bohrung. Zum Einpressen der Dichtung ist kein Gleitlack oder Gleitbeschichtung erforderlich.

In einer Ausgestaltung kann das Dichtelement materialeinheitlich ausgebildet sein. Derartige Dichtelemente sind kostengünstig herstellbar.

In einer anderen Ausgestaltung können die drei Bereiche des Dichtelementes aus voneinander abweichenden PTFE-Compounds gebildet sein. Dadurch kann für jeden Bereich ein auf den Anwendungsfall abgestimmter Werkstoff eingesetzt werden. Im Bereich der Dichtlippe ein verschleißarmer und den Verschleiß der Welle minimierenden PTFE-Compound, im Bereich des Stützkörpers ein PTFE-Compound mit optimierten Hafteigenschaften und im Bereich des Außenumfangs der Dichtung ein PTFE-Compound mit geringer Kriechneigung.

Der Stützkörper kann an seinem Außenumfang zumindest einen radial nach außen verlaufenden Vorsprung aufweisen. Der Vorsprung kann in eine Hinterschneidung der abzudichtenden Bohrung eingreifen und dadurch die axiale Fixierung der Dichtung sicherstellen.

Der Stützkörper kann an zumindest einer Stirnseite zumindest eine Fixierausnehmung aufweisen. Mittels der Fixierausnehmung kann das Dichtelement bei der Herstellung der Dichtung im Fertigungswerkzeug fixiert werden.

Der Stützkörper kann am Innenumfang zumindest eine radial nach innen gerichtete Zunge aufweisen. Mittels der Zungen kann die Dichtung bei der Montage in die Dichtstelle auf der abzudichtenden Welle zentriert werden. Dadurch vereinfacht sich die Montage der Dichtung.

Der dritte Bereich kann in radialer Richtung zumindest teilweise geschlitzt sein. Der Schlitz kann dabei im Bereich der halben Materialstärke angeordnet sein. Durch den Schlitz erhöht sich die Flexibilität des Dichtelements und bei der Montage vereinfacht sich die Vorwölbung des dritten Bereichs des Dichtelements.

### Kurzbeschreibung der Zeichnung

Einige Ausführungsbeispiele der erfindungsgemäßen Dichtung werden nachfolgend anhand der Figuren beschrieben. Diese zeigen, jeweils schematisch:
Fig. 1 eine erfindungsgemäße Dichtung;
Fig. 2 eine Dichtung nach der Montage in einer Dichtstelle;
Fig. 3 eine Dichtung mit Fixiervorsprüngen und Fixierzungen;
Fig. 4 eine Dichtung mit einem geschlitzten dritten Bereich;
Fig. 5 eine Dichtung mit einer Abziehhilfe;
Fig. 6 eine Dichtung mit einer radial nach außen wirkenden Druckfeder;
Fig. 7 eine Dichtung mit Segmenten zur axialen Fixierung der Dichtung;
Fig. 8 eine Dichtung mit einem hohlkegelstumpfförmigen Dichtelement.

### Ausführung der Erfindung

Die Figuren zeigen jeweils eine Dichtung 1 mit einem Stützkörper 2 und einem flexibel deformierbaren scheibenförmigen Dichtelement 3. Das Dichtelement 3 ist durch den Stützkörper 2 beidseitig umgeben und bereichsweise fixiert und teilt das Dichtelement in drei konzentrisch zueinander angeordnete funktionale Bereiche 4, 5, 6. Der erste Bereich 4 ist dem inneren Umfang der Dichtung 1 zugeordnet und bildet eine Dichtlippe 7. Der zweite Bereich 5 ist beidseitig vom Material des Stützkörpers 2 umgeben und fungiert damit als Anbindungsbereich an den Stützkörper 2. Der dritte Bereich 6 ist dem äußeren Umfang der Dichtung 1 zugeordnet. Dieser ist an eine starre Struktur 12, wie beispielsweise einem Gehäuse anlegbar und bildet die statische Abdichtung der Dichtung 1. Das Dichtelement 3 ist einstückig ausgebildet. Als Werkstoff für das Dichtelement 3 kommen PTFE-Compounds, unter Druck und Temperatur laminierte mit PTFE-Dispersion imprägnierte Vlies- und/oder Filzstofflagen sowie polymere durch Latex gebundene Vliesstoffe in Betracht. Der Stützkörper 2 kann aus einem thermoplastischen oder duroplastischen Werkstoff oder aus glasfaserverstärktem Polypropylensulfid oder aus glasfaserverstärktem Polyamid gefertigt sein. Der Stützkörper 2 weist beidseitig über den Umfang verteilt mehrere Fixierausnehmungen 10 auf.

Zur Herstellung der erfindungsgemäßen Dichtung 1 wird ein kreisringförmiges Dichtelement 3, beispielsweise durch Abstechen von einem rohrförmigen Halbzeug aus gesintertem PTFE oder durch Ausstanzen aus einem Plattenmaterial, hergestellt. In einem Zwischenschritt können durch Prägen oder Drehen Strukturen, beispielsweise Rückfördernuten, in die Oberfläche des Dichtelementes eingebracht werden. Das Dichtelement 3 wird in ein Formgebungswerkzeug eingelegt und in seiner Lage fixiert und mit dem Werkstoff des Stützrings 2 umspritzt.

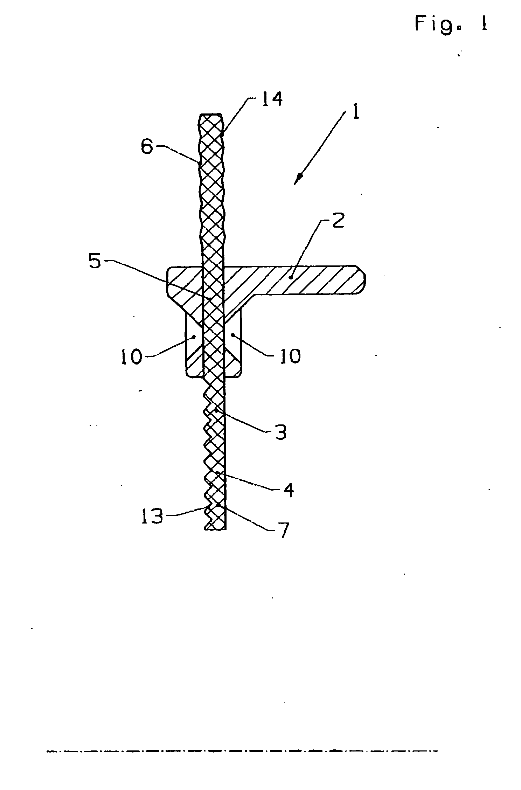

Figur 1 zeigt eine Dichtung 1 dessen Dichtelement 3 materialeinheitlich aus einem PTFE-Compound gebildet ist. Die Dichtlippe 7 weist eine Rückfördereinrichtung 13 zur Förderung des abzudichtenden Mediums auf. In die Rückfördereinrichtung 13 ist für die statische Dichtheit ein Schott integriert. In anderen Ausführungen kann in die Rückfördereinrichtung 13 eine Dichtleiste oder eine Kombination aus Schott und Dichtleiste integriert sein. Der dritte Bereich 6 des Dichtelements 3 weist beidseitig konzentrisch verlaufende Ausnehmungen 14 auf. Durch die Ausnehmungen 14 kann die Flächenpressung und damit die statische Dichtheit des dritten Bereichs 6 verbessert werden. Das Dichtelement 3 weist im zweiten Bereich 5 eine mittels Plasma-Bestrahlung aktivierte Oberfläche auf, wodurch sich die Haftungseigenschaften verbessern.

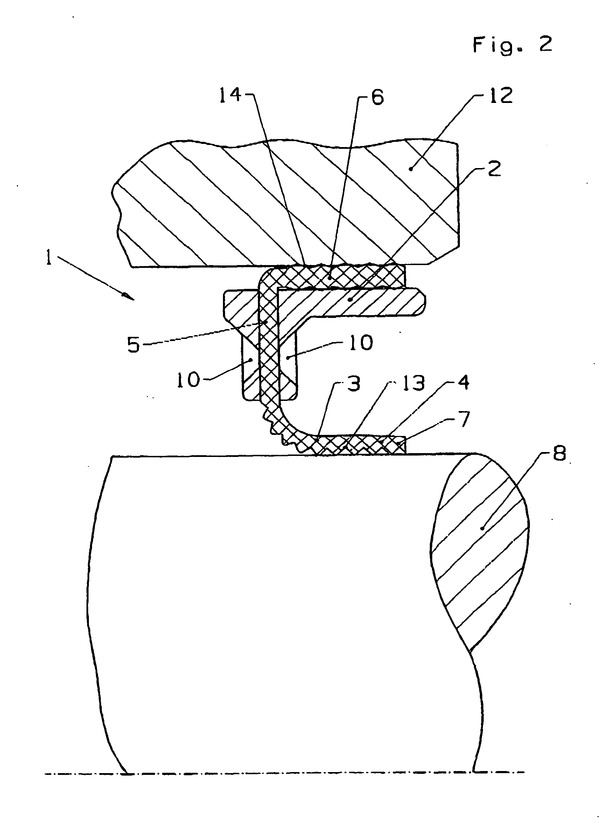

Figur 2 zeigt die Dichtung 1 gemäß Figur 1 in montiertem Zustand. Die Dichtlippe 7 liegt dabei dynamisch dichtend an dem abzudichtenden Maschinenelement 8 in dieser Ausführung einer Welle an. Der dritte Bereich 6 liegt an einer starren Struktur 12, in dieser Ausführung einem Gehäuse, an und dient der statischen Abdichtung.

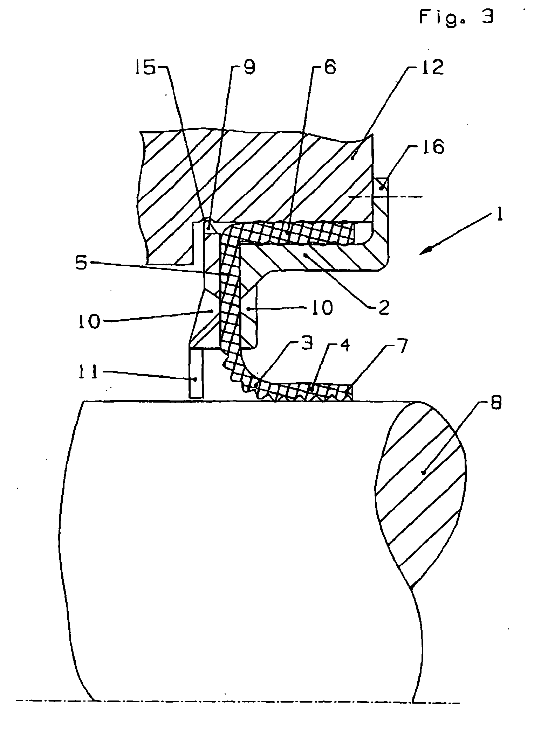

Figur 3 zeigt eine Dichtung 1 dessen Dichtelement 3 aus voneinander abweichenden PTFE-Compounds gebildet sind. Der erste Bereich 4 ist aus einem verschleißarmen PTFE-Compound welcher auch den Verschleiß des Maschinenelements 8 minimiert. Hierzu werden vorzugsweise neben Glasfasern Graphit, Molybdänsulfid und Kohlenstoff in Form von Pulver oder Fasern als Füllstoffe eingesetzt. Der zweite Bereich 5 ist aus einem PTFE-Compound mit guten Haftungseigenschaften gebildet. Die Haftungseigenschaften werden besonders verstärkt, wenn organische Stoffe wie beispielsweise Thermoplaste als Füllstoffe beigemischt werden. Die Oberfläche des zweiten Bereichs 5 weist zusätzlich eine aktivierte Oberfläche auf, um die Haftung weiter zu verbessern. Der dritte Bereich 6 ist aus einem PTFE-Compound mit geringer Kriechneigung gebildet. Durch die Beimischung von Glasfasern als Füllstoff wird die Kriechneigung (Kaltfluss) signifikant reduziert und ein ausreichender Festsitz in der aufnehmenden Bohrung sichergestellt. Der Stützkörper 2 weist an seinem Außenumfang einen radial nach außen verlaufenden Vorsprung 9 auf, der zur axialen Fixierung der Dichtung 1 in eine kongruent geformte Hinterschneidung 15 eingreift. Der Vorsprung 9 kann ringförmig sein oder durch einzelne radial nach außen gerichtete Zungen ausgebildet sein. Zur Begrenzung der Einpresstiefe der Dichtung 1 weist der Stützkörper an einer Stirnseite einen radial nach außen weisenden Bund 16 auf, der sich nach der Montage am Gehäuse 12 abstützt. Der Bund 16 kann Bohrungen zur Aufnahme von Befestigungselementen aufweisen. Am Innenumfang weist der Stützkörper 2 vier radial nach innen gerichtete Zungen 11 auf.

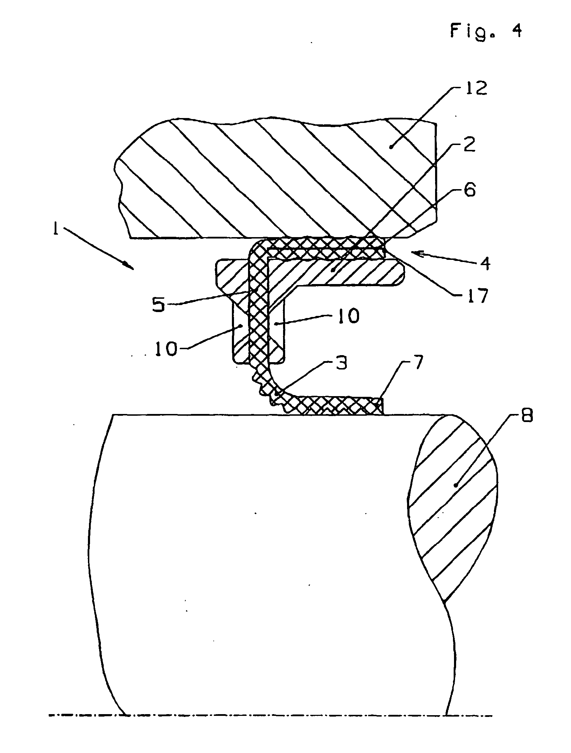

Figur 4 zeigt eine Dichtung gemäß Figur 2, wobei das Dichtelement 3 im dritten Bereich 6 vor der Montage einen auf halber Materialstärke radial verlaufenden Schlitz 17 aufweist.

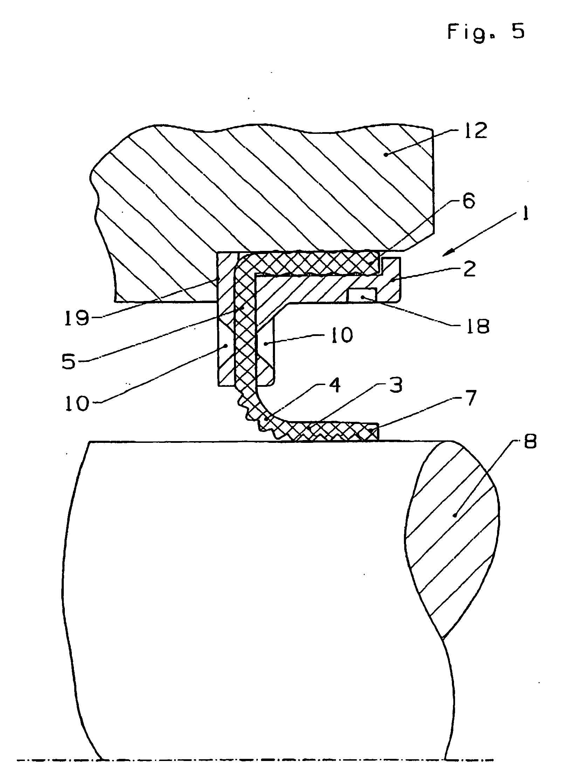

Figur 5 zeigt eine Dichtung 1 dessen Dichtelement 3 materialeinheitlich aus einem PTFE-Compound gebildet ist. Das Dichtelement 3 weist im zweiten Bereich 5 eine mittels Plasma-Bestrahlung aktivierte Oberfläche auf, wodurch sich die Haftungseigenschaften verbessern. Der Stützkörper 2 weist auf seinem axial verlaufenden Abschnitt eine Ausnehmung 18 die mit einer Abziehvorrichtung in Eingriff bringbar ist. Die Bohrung des Gehäuses 12 weist einen radial verlaufenden Anschlag 19 auf.

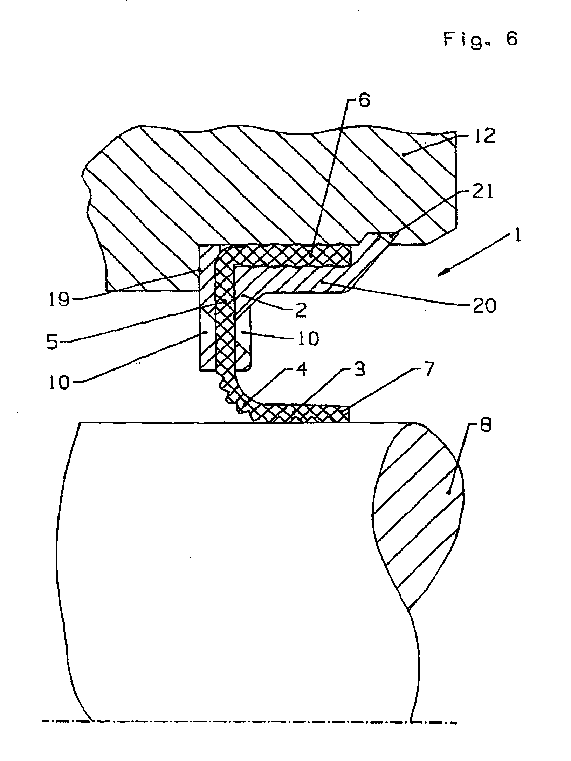

Figur 6 zeigt eine Dichtung 1, wobei der dritte Bereich 6 mittels einer radial nach außen wirkenden Druckfeder 20 an den Innenumfang der abzudichtenden Bohrung gepresst wird. Die Druckfeder 20 ist in einer Gehäuseausnehmung 21 eingeklipst.

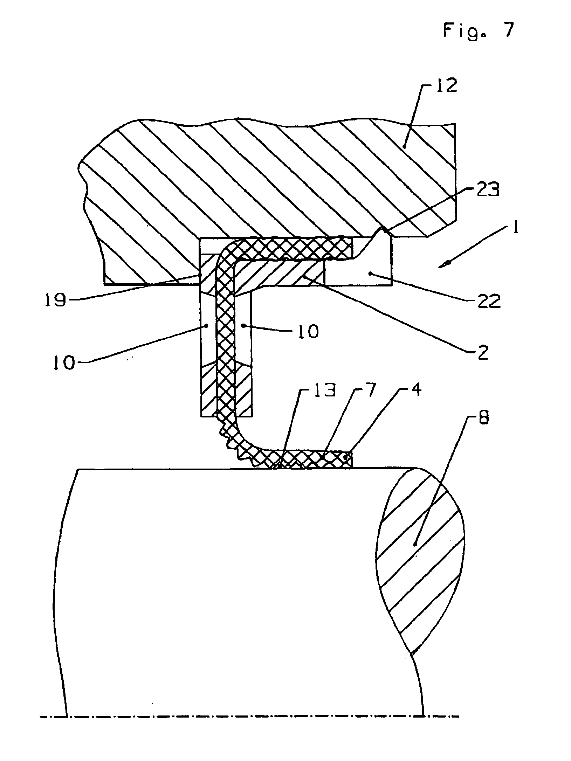

Figur 7 zeigt eine Dichtung 1, wobei der Stützring 2 außenumfangsseitig über den Umfang verteilt mehrere axial nach außen weisende Segmente 22 aufweist, die in kongruent geformte Segmentausnehmungen 23 des Gehäuses 12 eingerastet sind. Das Dichtelement 3 ist materialeinheitlich aus einem PTFE-Compound gebildet. Die Dichtlippe 7 weist eine Rückfördereinrichtung 13 zur Förderung des abzudichtenden Mediums auf. Die Bohrung des Gehäuses 12 weist einen radial nach innen verlaufenden Anschlag 19 auf.

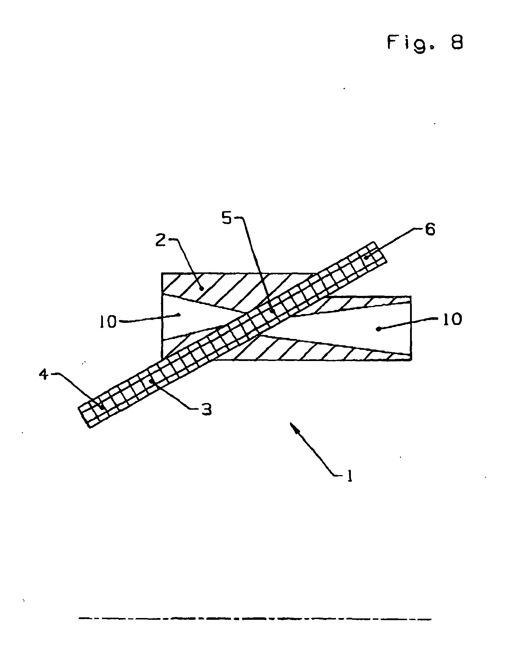

Figur 8 zeigt eine Dichtung 1, wobei das Dichtelement 3 hohlkegelstumpfförmig ausgebildet ist. Das Dichtelement 3 wird durch Abstechen eines kegelstumpfförmigen Ringes dünnen Querschnitts von einem zylindrischen Rohr hergestellt, wobei die Abstechrichtung einen spitzen oder stumpfen Winkel zur Symmetrieachse des Rohres bildet. Die Dichtung 1 mit hohlkegelstumpfförmigem Dichtelement 3 weist eine besonders geringe radiale Erstreckung auf und ist daher insbesondere bei Platzmangel der abzudichtenden Bohrung in radialer Richtung vorteilhaft.

## Patentansprüche

1. Dichtung (1), umfassend einen Stützkörper (2) und ein flexibel deformierbares Dichtelement (3), wobei das Dichtelement (3) durch den Stützkörper (2) zumindest bereichsweise fixierbar ist und wobei das Dichtelement (3) einstückig als Scheibe oder als Hohlkegelstumpf ausgebildet ist und durch den Stützkörper (2) in mindestens drei funktionale Bereiche (4, 5, 6) aufteilbar ist, **dadurch gekennzeichnet, dass** der Stützkörper (2) durch umspritzen des in ein Formgebungswerkzeug eingelegten Dichtelements (3) mit dem Werkstoff des Stützkörpers (2) einstückig ausgebildet ist und das Dichtelement (3) beidseitig umgibt.

2. Dichtung nach Anspruch 1, **dadurch gekennzeichnet, dass** ein erster Bereich (4) dem inneren Umfang der Dichtung (1) zugeordnet ist, wobei dem ersten Bereich (4) eine Dichtlippe (7) zugeordnet ist, welche an ein abzudichtendes Maschinenelement (8) anlegbar ist.

3. Dichtung nach Anspruch 1 oder 2, **dadurch gekennzeichnet, dass** ein zweiter Bereich (5) als Anbindungsbereich an den Stützkörper (2) fungiert.

4. Dichtung nach einem der Ansprüche 1 bis 3, **dadurch gekennzeichnet, dass** ein dritter Bereich (6) dem äußeren Umfang der Dichtung (1) zugeordnet ist und an eine starre Struktur (12) anlegbar ist.

5. Dichtung nach einem der Ansprüche 1 bis 4, **dadurch gekennzeichnet, dass** das Dichtelement (3) aus einem PTFE-Compound oder aus einer mit einer PTFE-Dispersion imprägnierten Vlies- und/oder Filzstofflage oder aus einem polymerem durch Latex gebundenen Vliesstoff gebildet ist.

6. Dichtung nach einem der Ansprüche 1 bis 5, **dadurch gekennzeichnet, dass** das Dichtelement (3) materialeinheitlich ausgebildet ist.

7. Dichtung nach einem der Ansprüche 1 bis 5, **dadurch gekennzeichnet, dass** die drei Bereiche (4, 5, 6) des Dichtelementes (3) aus voneinander abweichenden PTFE-Compounds gebildet sind.

8. Dichtung nach einem der Ansprüche 1 bis 7, **dadurch gekennzeichnet, dass** der Stützkörper (2) an seinem Außenumfang zumindest einen radial nach außen verlaufenden Vorsprung (9) aufweist.

9. Dichtung nach einem der Ansprüche 1 bis 8, **dadurch gekennzeichnet, dass** der Stützkörper (2) an zumindest einer Stirnseite zumindest eine Fixierausnehmung (10) aufweist.

10. Dichtung nach einem der Ansprüche 1 bis 9, **dadurch gekennzeichnet, dass** der Stützkörper (2) am Innenumfang zumindest eine radial nach innen gerichtete Zunge (11) aufweist.

11. Dichtung nach einem der Ansprüche 1 bis 10, **dadurch gekennzeichnet, dass** der dritte Bereich (6) radialer Richtung zumindest teilweise geschlitzt ist.

## Claims

1. Seal (1), including a supporting unit (2) and a flexibly deformable sealing element (3), in which the sealing element (3) may be fixed at least in certain regions by the supporting unit (2), and in which the sealing element (3) is made in one part as a disc or as a truncated hollow cone and may be divided by the supporting unit (2) into at least three functional regions (4, 5, 6), **characterized in that** the supporting unit (2) is made in one part as a result of injection moulding the material of the supporting unit (2) around the sealing element (3), which is inserted into a shaping mould, and surrounds the sealing element (3) on both sides.

2. Seal according to Claim 1, **characterized in that** a first region (4) is associated with the inner periphery of the seal (1), and associated with the first region (4) is a sealing lip (7) which may be laid against a machine part (8) which is to be sealed.

3. Seal according to Claim 1 or 2, **characterized in that** a second region (5) acts as a region for connection to the supporting unit (2).

4. Seal according to one of Claims 1 to 3, **characterized in that** a third region (6) is associated with the outer periphery of the seal (1) and may be laid against a rigid structure (12).

5. Seal according to one of Claims 1 to 4, **characterized in that** the sealing element (3) is made from a PTFE compound or from a fleece and/or felt layer impregnated with a PTFE dispersion or from a polymer fleece bonded using latex.

6. Seal according to one of Claims 1 to 5, **characterized in that** the sealing element (3) is made from a single material.

7. Seal according to one of Claims 1 to 5, **characterized in that** the three regions (4, 5, 6) of the sealing element (3) are made from mutually different PTFE compounds.

8. Seal according to one of Claims 1 to 7, **characterized in that** the supporting unit (2) has at least one radially outward projection (9) on its outer periphery.

9. Seal according to one of Claims 1 to 8, **characterized in that** the supporting unit (2) has at least one fixing recess (10) on at least one end face.

10. Seal according to one of Claims 1 to 9, **characterized in that** the supporting unit (2) has at least one radially inwardly directed tongue (11) on the inner periphery.

11. Seal according to one of Claims 1 to 10, **characterized in that** the third region (6) is at least partly slotted in the radial direction.

## Revendications

1. Joint d'étanchéité (1), comprenant un corps de soutien (2) et un élément d'étanchéité (3) flexiblement déformable, l'élément d'étanchéité (3) pouvant être au moins sectoriellement immobilisé par le corps de soutien (2) et l'élément d'étanchéité (3) étant réalisé d'un seul tenant en forme de disque ou de tronc de cône creux et pouvant être divisé par le corps de soutien (2) en au moins trois régions fonctionnelles (4, 5, 6), **caractérisé en ce que** le corps de soutien (2) est réalisé d'un seul tenant en enrobant du matériau du corps de soutien (2), par injection, l'élément d'étanchéité (3) installé dans un moule de modelage, et entoure de part et d'autre l'élément d'étanchéité (3).

2. Joint d'étanchéité selon la revendication 1, **caractérisé en ce qu'**une première région (4) est associée au pourtour intérieur du joint d'étanchéité (1), sachant qu'une lèvre d'étanchéité (7), qui peut être appliquée contre un élément de machine (8) à étancher, est associée à la première région (4).

3. Joint d'étanchéité selon la revendication 1 ou 2, **caractérisé en ce qu'**une deuxième région (5) sert de région de rattachement au corps de soutien (2).

4. Joint d'étanchéité selon l'une quelconque des revendications 1 à 3, **caractérisé en ce qu'**une troisième région (6) est associée au pourtour extérieur du joint d'étanchéité (1) et peut être appliquée contre une structure rigide (12).

5. Joint d'étanchéité selon l'une quelconque des revendications 1 à 4, **caractérisé en ce que** l'élément d'étanchéité (3) est formé d'un composé à base de PTFE ou d'une couche de non-tissé et/ou de feutre imprégnée d'une dispersion de PTFE ou d'un non-tissé polymère lié par du latex.

6. Joint d'étanchéité selon l'une quelconque des revendications 1 à 5, **caractérisé en ce que** l'élément d'étanchéité (3) est réalisé en un matériau uniforme.

7. Joint d'étanchéité selon l'une quelconque des revendications 1 à 5, **caractérisé en ce que** les trois régions (4, 5, 6) de l'élément d'étanchéité (3) sont formées de composés de PTFE différant entre eux.

8. Joint d'étanchéité selon l'une quelconque des revendications 1 à 7, **caractérisé en ce que** le corps de soutien (2) présente sur son pourtour extérieur au moins une saillie (9) s'étendant radialement vers l'extérieur.

9. Joint d'étanchéité selon l'une quelconque des revendications 1 à 8, **caractérisé en ce que** le corps de soutien (2) présente sur au moins un côté frontal au moins un évidement d'immobilisation (10).

10. Joint d'étanchéité selon l'une quelconque des revendications 1 à 9, **caractérisé en ce que** le corps de soutien (2) présente sur le pourtour intérieur au moins une languette (11) dirigée radialement vers l'intérieur.

11. Joint d'étanchéité selon l'une quelconque des revendications 1 à 10, **caractérisé en ce que** la troisième région (6) est fendue au moins partiellement en direction radiale.
